# EUROPÄISCHE PATENTSCHRIFT

(11) **EP 2 170 215 B1**
(45) Veröffentlichungstag und Bekanntmachung des Hinweises auf die Patenterteilung: **24.08.2016**
(21) Anmeldenummer: 08785158.0
(22) Anmeldetag: 28.07.2008
(51) Int. Cl.: A61C 17/06

(54) **ABSCHEIDER ZUM ABSCHEIDEN VON LUFT UND FESTSTOFFEN AUS EINEM ZAHNÄRZTLICHEN ABWASSERGEMISCH**
SEPARATOR FOR SEPARATING AIR AND SOLIDS FROM A DENTAL WASTE WATER MIXTURE
DISPOSITIF DE SÉPARATION DESTINÉ À SÉPARER L'AIR ET DES MATIÈRES SOLIDES D'EAUX USÉES D'INSTALLATIONS DENTAIRES

(30) Priorität: 27.07.2007 AT 11892007
(43) Veröffentlichungstag der Anmeldung: 07.04.2010
(73) Patentinhaber: Pregenzer, Bruno, 6414 Mieming (AT); Konzett, Alfred, 6082 Patsch (AT)
(72) Erfinder: Pregenzer, Bruno, 6414 Mieming (AT); Konzett, Alfred, 6082 Patsch (AT)
(74) Vertreter: Thoma, Michael
(86) Internationale Anmeldenummer: PCT/EP2008/006208
(87) Internationale Veröffentlichungsnummer: WO 2009/015853

(56) Entgegenhaltungen:
- CH-A- 238 684
- GB-A- 252 173
- US-A- 4 193 536
- US-A- 4 356 959

## Beschreibung

Die vorliegende Erfindung betrifft einen Abscheider zum Abscheiden von Luft und ggf. vorhandenen Feststoffen aus einem zahnärztlichen Abwassergemisch, mit einem Luft-Wasser-Separator, wobei ein Gemischzufuhrrohr in einer Zentrifugentrommel mündet, ein Luftabfuhrkanal zu dem Gemischzufuhrrohr aus der Zentrifugentrommel herausgeführt ist und die Zentrifugentrommel einen oben liegenden Ablaufrand besitzt, über den hinweg ein Wasserabfluss auf die Außenseite der Zentrifugentrommel geführt ist. Dabei kann ein Feststoffabscheider vorgesehen sein, der mit dem Luft-Wasser-Separator ineinander liegend angeordnet sein und zumindest einen Feststoffsperrflansch an der Zentrifugentrommelmantelfläche aufweisen kann.

Derartige Abscheider, mit Hilfe derer die an zahnärztlichen Arbeitsplätzen anfallenden Abwassergemische, welche häufig neben Wasser und Luft auch noch Feststoffe wie Amalgam, Keramik, etc., enthalten, in ihre Bestandteile aufgespalten und separat entsorgt werden können, sind in mannigfacher Gestaltung bekannt. Häufig werden derartige Abscheider in den Unterschrank eines Speibeckens des zahnärztlichen Arbeitsplatzes oder ein anderes Einbaumöbel integriert, so dass eine kompakte Bauweise vonnöten ist, wobei insbesondere auch die axiale Baulänge der Abscheider von Bedeutung ist, um auch bei nur geringem zur Verfügung stehenden Gefälle bzw. begrenzter Einbauhöhe arbeiten zu können. Es wurde deshalb in jüngerer Zeit vorgeschlagen, den Luft-/Wasserseparator und den Feststoffabscheider zueinander koaxial ineinander liegend anzuordnen, d.h. sozusagen radial ineinander zu schachteln, wodurch die notwendige Baugröße beträchtlich reduziert werden kann. Beispielsweise zeigen die DE 39 16 742 und die DE 39 43 819 solche ineinander geschachtelten Anordnungen.

Hierbei ist es von Vorteil, ein Gemischzufuhrrohr von oben her in die Zentrifugentrommel zu führen und das austretende Abwassergemisch in der Zentrifugentrommel einer ausreichenden Radialbeschleunigung zu unterwerfen, so dass die flüssigen und festen Bestandteile des Abwassergemischs an der Zentrifugentrommelmantelfläche auflaufen, während die Luft aus dem Abwassergemisch gegenläufig zu dem Gemischzufuhrrohr nach oben aus der Zentrifugentrommel abgeführt werden kann. Während die Feststoffe von einem entsprechenden Feststoffsperrflansch an der Innenmantelfläche der Zentrifugentrommel zurückgehalten werden, kann das Wasser bzw. die Flüssigkeit aus dem Abwassergemisch über diesen Feststoffsperrflansch hinweg über die Oberseite der Zentrifugentrommel austreten. Dort wird es üblicherweise mit einer Wasserförderpumpe abgefördert, wobei es bekannt ist, am oberen Zentrifugentrommelrand ein Pumpenrad mit einem Schaufelkranz anzuordnen.

Derartige Abscheider mit ineinander geschachtelter Bauweise sind jedoch häufig schwierig zu reinigen bzw. schwierig zu demontieren und wieder zu montieren. Zudem ergeben sich zum Teil beträchtliche Zentrifugentrommelbelastungen, die eine Taumelneigung mit sich bringen, welcher mit zum Teil aufwendigen Lagerungsmaßnahmen begegnet werden muss.

Aus der US 4,356,959 ist ein Abscheider nach dem Oberbegriff des Anspruchs 1 bekannt, wobei hier das zu bearbeitende Gemisch zentral über ein Fallrohr in eine rotierende, trichterförmige Trommel gegeben wird. Ferner zeigt die Schrift US 4,193,536 eine Zentrifuge, deren Rotor als Lüfter dient und einen außerhalb eines Rotorgehäuses angeordneten Motor kühlt. Weitere Abscheider sind aus den Schriften GB 252 173 und CH 238 684 bekannt.

Hiervon ausgehend liegt der vorliegenden Erfindung die Aufgabe zugrunde, einen verbesserten Abscheider der genannten Art zu schaffen, der Nachteile des Standes der Technik vermeidet und letzteren in vorteilhafter Weise weiterbildet. Vorzugsweise soll eine einfach zu reinigende Anordnung mit geringer Taumelneigung geschaffen werden, ohne eine effiziente Abscheidung der Gemischbestandteile zu beeinträchtigen.

Erfindungsgemäß wird diese Aufgabe durch einen Abscheider gemäß Anspruch 1 gelöst. Bevorzugte Ausgestaltungen der Erfindung sind Gegenstand der abhängigen Ansprüche.

Erfindungsgemäß wird also vorgeschlagen, die belastungsintensiven, mit Kräften aus dem Abwasser stärker beaufschlagten und ggf. auch gewichtsintensiveren Bauteile zentral am Boden der Zentrifugentrommel zu konzentrieren, um eine günstige Gewichtsverteilung der gesamten Anordnung der bewegten Bauteile zu erreichen. Erfindungsgemäß mündet das Gemischzufuhrrohr auf einem zentralen, über dem Zentrifugentrommelboden angeordneten Turbinenrad, wobei eine Wasserförderpumpe auf einer Außenseite der Zentrifugentrommel im Bereich des Zentrifugentrommelbodens angeordnet ist. Hierdurch ergibt sich ein tiefer Schwerpunkt und eine günstige Gewichtsverteilung, die zu einer geringen Taumelneigung der rotierenden Teile führt und damit eine leichtbauende Lagerung erlaubt. Trotzdem kann durch das zentrale Turbinenrad, auf das das Gemischzufuhrrohr unmittelbar mündet, eine äußerst effiziente Trennung der Luft- und Flüssigkeits- bzw. Feststoffanteile des Abwassergemisches erreicht werden. Das Turbinenrad schleudert die flüssigen und festen Bestandteile mit hoher Geschwindigkeit weg, während die luft- bzw. die gasförmigen Bestandteile des Abwassergemisches gegenläufig zum Gemischzufuhrrohr aus der Zentrifugentrommel abgeführt werden können.

In vorteilhafter Weiterbildung der Erfindung bilden dabei das Turbinenrad, die Zentrifugentrommel und das Pumpenrad der Abwasserförderpumpe eine Montageeinheit, die vorteilhafterweise als Ganzes von dem das Gemischzufuhrrohr aufnehmenden Abscheidergehäuseteil entnehmbar ist. Hierdurch kann eine einfache Reinigung und Wartung des Abscheiders erreicht werden, da die gesamte rotierende Baueinheit als solche abgenommen werden kann. Insbesondere kann durch diese wartungsfreundliche Entnehmbarkeit auf separate Feststoffaustrittsöffnungen in der Zentrifugentrommel verzichtet werden, da zum Entfernen der angesammelten Feststoffe lediglich die genannte Montagebaueinheit herausgenommen werden braucht, so dass die Feststoffe aus der Zentrifugentrommel entnommen werden können.

Vorteilhafterweise umfasst die genannte Montageeinheit einen napfförmig ausgebildeten Baugruppenträger, der ein Abscheidergehäuseteil bildet, das einerseits an dem vorgenannten Abscheidergehäuseteil lösbar befestigt ist und andererseits das Pumpenrad der Abwasserförderpumpe, die Zentrifugentrommel und das Turbinenrad drehbar trägt bzw. aufnimmt. Um die zu einer Baugruppe zusammengefassten rotierenden Bauteile Turbinenrad und Zentrifugentrommel abzunehmen, braucht lediglich der Baugruppenträger vom restlichen Abscheidergehäuse gelöst werden, so dass die gesamte Montageeinheit abgenommen werden kann.

In Weiterbildung der Erfindung sind das Pumpenrad der Abwasserförderpumpe einerseits und die Zentrifugentrommel und das mit dieser verbundene Turbinenrad andererseits miteinander lösbar verbunden. Dabei kann das Pumpenrad der Abwasserförderpumpe an einem Naben- und/oder Wellenstück befestigt und/oder mit diesem Integral einstückig ausgebildet sein. Dieses ist an dem vorgenannten Abscheidergehäuseteil, das den Baugruppenträger der Montageeinheit bildet, drehbar gelagert.

Die Zentrifugentrommel kann grundsätzlich ebenfalls an dem besagten Nabenund/oder Wellenstück gelagert sein. Vorteilhafterweise jedoch ist die Zentrifugentrommel mit ihrem Boden an dem vorgenannten Pumpenrad der Abwasserförderpumpe drehfest verbindbar. Vorteilhafterweise sind hierbei werkzeugfrei betätigbare, lösbare Schnellverschlussmittel vorgesehen, mittels derer die Zentrifugentrommel an dem Pumpenrad der Abwasserförderpumpe schnell und rasch befestigt werden kann und beispielsweise zum Zwecke der Reinigung der Zentrifugentrommel einfach von diesem wieder gelöst werden kann. Die genannten Schnellverschlussmittel können hierbei grundsätzlich verschieden ausgebildet sein. Nach einer vorteilhaften Ausführung können die Schnellverschlussmittel als federvorgespannter Bajonettverschluss ausgebildet sein, der am Boden der Zentrifugentrommel und an einer axialen Stirnfläche des Pumpenrades Verriegelungsvorsprünge und damit zusammenwirkende Verriegelungsausnehmungen aufweist, die durch eine axiale Steckbewegung ineinandersetzbar und durch eine Relativdrehung von Zentrifugentrommel und Pumpenrad miteinander verriegelbar sind. Vorteilhafterweise ist hierbei zwischen Pumpenrad und Zentrifugentrommel eine Vorspanneinrichtung beispielsweise in Form einer Schraubenfeder vorgesehen, um eine spielfreie, starre Verbindung der beiden Bauteile miteinander sicherzustellen.

In weiterhin vorteilhafter Ausführung der Erfindung ist wiederum das im Innenraum der Zentrifugentrommel sitzende Turbinenrad unmittelbar am Boden der Zentrifugentrommel vorzugsweise lösbar befestigt. Beispielsweise kann das Turbinenrad auf den Boden der Zentrifugentrommel geschraubt sein. Durch das unmittelbar auf dem Zentrifugentrommelboden sitzende Turbinenrad wird in bestmöglicher Weise eine Konzentration des Schwerpunkts der rotierenden Bauteile erreicht.

Um eine leichtbauende und doch stabile Lagerung der drehenden Bauteile des Abscheiders zu erreichen, können nach einer vorteilhaften Ausführung der Erfindung das Pumpenrad der Abwasserförderpumpe, die daran befestigte Zentrifugentrommel und das wiederum daran befestigte Turbinenrad an einem zentralen Nabenstück drehfest befestigt sein, das ein Kupplungsstück zur Ankupplung eines gemeinsamen Drehantriebs aufweist. Das besagte Nabenstück ist dabei vorteilhafterweise drehbar in dem ein Gehäuseteil bildenden Baugruppenträger aufgenommen, wobei der Drehantrieb mit einem Gehäusestück lösbar an dem Baugruppenträger befestigt sein kann und mit einer Antriebswelle lösbar mit dem genannten Nabenstück gekuppelt werden kann. Vorzugsweise umfasst der als Deckel ausgebildete Baugruppenträger stirnseitig einen zentralen Anschlussflansch, an dem der Drehantrieb mit einem stirnseitigen Gehäuseabschnitt vorzugsweise starr befestigt werden kann.

In Weiterbildung der Erfindung kann vorgesehen sein, dass das Nabenstück Befestigungsmittel zur starren Befestigung der Antriebswelle des Drehantriebs aufweist.

Das Nabenstück kann dabei mittels eines Drehlagers vorzugsweise in Form zumindest eines Drehlagers an dem als Deckel ausgebildeten Baugruppenträger gelagert sein. Alternativ oder zusätzlich können auch die Lager des Drehantriebes, d.h. der Antriebswelle gegenüber dem Drehantriebkorpus, genutzt werden, um die rotierenden Abscheiderbauteile gegenüber dem Abscheidergehäuse bzw. dem als Deckel ausgebildeten Baugruppenträger zu lagern. Wird einerseits das vorgenannte Nabenstück starr mit der Antriebswelle und andererseits das Drehantriebsgehäuse starr mit dem als Deckel ausgebildeten Baugruppenträger verbunden, können die Lager der Antriebswelle des Drehantriebs gleichzeitig auch die Lagerung des Nabenstücks und der daran befestigten drehbaren Abscheiderbauteile bewirken.

Die Zentrifugentrommel nebst dem damit verbundenen Turbinenrad und dem Pumpenrad ist also vorteilhafterweise an einem zentralen Bodenabschnitt durch nur ein zentrales Drehlager unter dem Trommelboden gelagert.

Um eine effiziente Abwasserförderung und andererseits einen kompakten Aufbau zu erreichen, ist es von Vorteil, wenn das Pumpenrad der Abwasserförderpumpe einen Schaufelblattkranz aufweist, der am äußeren Rand des Zentrifugentrommelbodens angeordnet ist. Vorteilhafterweise weist dabei das Pumpenrad der Abwasserförderpumpe einen axialen Einlaufbereich auf, mit dem das Pumpenrad unter dem Zentrifugentrommelboden an dessen äußerem Randabschnitt sitzt, so dass ein ringförmiger, die Zentrifugentrommelmantelfläche umgebender Abschnitt des Wasserabflusses unmittelbar auf den axialen Einlaufbereich des Pumpenrades münden kann.

Um besonders kompakt zu bauen, besitzt das Pumpenrad dabei vorteilhafterweise einen radialen Abflussbereich. Hierdurch kann ein Abwasseraustrittsanschluss im wesentlichen unmittelbar unter dem Zentrifugentrommelboden auf Höhe des dort angeordneten Pumpenrads vorgesehen werden, wodurch ein insgesamt geringes Gefälle, beispielsweise unter einem Speibecken eines zahnärztlichen Arbeitsplatzes, ausreichend ist.

In Weiterbildung der Erfindung besitzt auch das in der Zentrifugentrommel angeordnete Turbinenrad einen axialen Einlaufbereich sowie einen radialen Abflussbereich, so dass die axial, d.h. im wesentlichen parallel zur Drehachse der Zentrifugentrommel und des Turbinenrades eingeleiteten Abwassergemische, in dem Turbinenrad eine Umlenkung erfahren und im wesentlichen quer zur genannten Drehachse auf die Mantelfläche der Zentrifugentrommel zu geschleudert werden.

Um eine effiziente Einleitung des Abwassergemisches in das Turbinenrad zu erreichen, ist in Weiterbildung der Erfindung vorgesehen, dass das Gemischzufuhrrohr unmittelbar bis auf den Einlaufbereich des Turbinenrads geführt ist, wobei das Turbinenrad und das Gemischzufuhrrohr beispielsweise mittels ringförmiger Taschen ineinander greifen können.

Dabei ist in Weiterbildung der Erfindung das Gemischzufuhrrohr stehend angeordnet, so dass sich das Turbinenrad relativ zu dem Gemischzufuhrrohr dreht. Dementsprechend braucht das Gemischzufuhrrohr an seinem Gehäuseaustritt keine aufwendigen Dichtungsmittel aufweisen, wie dies bei mitdrehenden Gemischzufuhrrohren der Fall ist.

Um eine insgesamt besonders kompakte Anordnung zu erreichen, ist das Gemischzufuhrrohr vorzugsweise koaxial in dem Luftabfuhrkanal aufgenommen, welcher gegenläufig zu dem Gemischzufuhrrohr aus der Zentrifugentrommel herausgeführt ist. Es versteht sich, dass der Luftabfuhrkanal nicht über seine gesamte Länge koaxial zu dem Gemischzufuhrrohr und/oder koaxial zur Drehachse der Zentrifugentrommel aus letzterer herausgeführt zu sein braucht. In bevorzugter Weiterbildung der Erfindung umfasst der Luftabfuhrkanal oberhalb der Zentrifugentrommel einen radial bzw. quer zur Drehachse der Zentrifugentrommel aus dem Abscheidergehäuse herausgeführten Luftaustritt.

Zur Erreichung einer axial besonders kompakt bauenden Ausführung kann vorteilhafterweise ein separates Lüfterrad zur Kühlung des die Zentrifugentrommel antreibenden Motors weggelassen sein, so dass der genannte Motor mit seinem Wicklungsabschnitt bzw. dem diesen umgebenden Gehäuse unmittelbar unter dem vorgenannten Baugruppenträger sitzen kann, der als Deckel für das Pumpenrad der Abwasserförderpumpe fungiert. Durch den Verzicht auf ein Kühlungs-Lüfterrad zwischen Motor und Zentrifugentrommel kann die axiale Bauweise verkürzt werden. Um dennoch eine ausreichende Kühlung des Motors zu erreichen, ist nach einem weiteren Aspekt der vorliegenden Erfindung vorgesehen, dass der aus der Zentrifugentrommel herausgeführte Luftabfuhrkanal als Kühlluftkanal zur Kühlung des genannten Motors ausgebildet ist. Insbesondere kann der genannte Luftabfuhrkanal zumindest abschnittsweise über den Motor, um den Motor herum und/oder vorteilhafterweise durch den Motor hindurchgeführt sein, so dass die aus der Zentrifugentrommel abgeführte Luft den Motor kühlt. Die durch den Luftabfuhrkanal geführte Luft braucht dabei nicht zwangsweise vollständig auf den Motor bzw. dessen Wärme produzierenden Bereiche geführt werden. Beispielsweise kann der Luftabfuhrkanal eine Abzweigung aufweisen, so dass ein Teil der abgeführten Luft zur Kühlung verwendet und der restliche Teil unmittelbar abgeführt wird. Um eine maximale Kühlleistung zu erreichen, ist in bevorzugter Ausführung der Erfindung jedoch der gesamte Luftabfuhrkanal durch einen die Wicklung des Motors umgebenden Gehäuseabschnitt hindurchgeführt, um die in der Motorwicklung entstehende Wärme bestmöglich abzuführen.

In vorteilhafter Weise kann hierbei der Luftabfuhrkanal zwei etwa halbschalenförmige Kühlluftkanalabschnitte aufweisen, die die Wicklung des Motors bzw. einen die Wicklung einschließenden Gehäuseabschnitt umschmiegen, wobei in vorteilhafter Ausführung der Erfindung die genannten halbschalenförmigen Kühlluftkanalabschnitte gegenläufig durchströmt sein können. In Weiterbildung der Erfindung kann hierbei das die Luftabfuhr bewirkende Gebläse, das vorteilhafterweise ebenfalls von dem die Zentrifugentrommel antreibenden Motor angetrieben wird, auf der der Zentrifugentrommel gegenüberliegenden Seite des Motors angeordnet sein, wobei nach einer vorteilhaften Ausführung der Erfindung der aus der Zentrifugentrommel kommende Luftabfuhrkanal an einem der Zentrifugentrommel zugewandten Endabschnitt des Motorgehäuses in das Motorgehäuse geführt ist, dort an dem Wicklungsabschnitt des Motors entlanggeführt ist und mit dem Gebläse in Verbindung steht. Um eine axial kurzbauende Ausführung zu erreichen, ist dabei vorteilhafterweise vorgesehen, dass der von der Zentrifugentrommel her kommende Luftabfuhrkanal radial in das Motorgehäuse hineingeführt ist, oder der Abluftkanal des Gebläses radial aus dem Motorgehäuse herausgeführt ist.

Vorteilhafterweise erfüllt dabei der um den Motor bzw. dessen Wicklung herumgeführte Luftabfuhr- bzw. Kühlluftkanal eine Doppelfunktion dahingehend, dass er nicht nur den Motor kühlt, sondern auch dessen Geräuschentwicklung minimiert. In Weiterbildung der Erfindung kann der genannte Luftabfuhrkanal zumindest abschnittsweise als Schalldämpfer ausgebildet sein und/oder mit schalldämpfenden Mitteln versehen sein, insbesondere in dem den Motor umströmenden Abschnitt. In besonders vorteilhafter Weise kann dabei vorgesehen sein, dass die vorgenannten halbschalenförmigen Kühlluftkanalabschnitte, die die Motorwicklung umgeben, mit schall- und/oder wärmedämmendem Material verschalt sind.

Um die Festkörperabscheidung in der Zentrifugentrommel besonders effizient auszugestalten, können in der Zentrifugentrommel mehrere, übereinander angeordnete Festkörpersperrflansche angeordnet sein. Schafft es ein Festkörper, über einen ersten Festkörpersperrflansch hinwegzukommen, fängt ihn der nächste Festkörpersperrflansch oder der übernächste Festkörpersperrflansch etc. ein.

In Weiterbildung der Erfindung sind dabei die übereinander angeordneten Festkörpersperrflansche voneinander verschieden ausgebildet, wobei grundsätzlich verschiedene Abweichungen in der Formgebung möglich sind. Grundsätzlich wäre es natürlich auch möglich, den mehreren Festkörpersperrflanschen dieselbe Form zu geben. Eine effizientere Festkörperseparation kann jedoch durch verschieden ausgebildete Festkörpersperrflansche erreicht werden.

In Weiterbildung der Erfindung besitzt dabei ein näher am Zentrifugentrommelboden liegender Festkörpersperrflansch eine radial weiter innen liegende Überlaufkante als ein oberhalb dieses Festkörpersperrflansches angeordneter weiterer Festkörpersperrflansch. Dabei kann der näher am Zentrifugentrommelboden liegende Festkörpersperrflansch eine radial nach innen, zum Zentrifugentrommelboden schräg abfallende Schrägfläche bilden, während ein am oberen Zentrifugentrommelrand liegender Festkörpersperrflansch im Querschnitt betrachtet geknickt ausgebildet ist und einen nach unten zum Zentrifugentrommelboden hängenden Innensteg bzw. Innenflansch aufweist.

Um beim Anlaufen des Abscheiders Einbußen im Trennungsgrad aufgrund von Mitschleppeffekten zu vermeiden, ist in Weiterbildung der Erfindung ein Wasserentferner vorgesehen, der bei Stillstand der Zentrifugentrommel die darin gesammelte Flüssigkeit entfernt. Der Wasserentferner kann hierbei vorteilhafterweise als Zwischenspeicher fungieren und die aus der Zentrifugentrommel entfernte Flüssigkeit beim bzw. nach dem Wiederanlaufen der Zentrifugentrommel in letztere zurückspeisen. Durch das temporäre Entfernen der in der Zentrifugentrommel gespeicherten Flüssigkeit bei Stillstand der Zentrifugentrommel wird ein Überschwappen der Flüssigkeit über den Zentrifugentrommelrand beim Wiederanlauf verhindert. Zudem werden Schwingungs- und Taumelbelastungen der Zentrifugentrommel beim Anlaufen verringert. Der Wasserentferner kann hierbei grundsätzlich verschieden aufgebaut sein. Nach einer vorteilhaften Ausführung der Erfindung kann der Wasserentferner einen volumenveränderlichen Zwischenspeicher, vorzugsweise in Form eines Balgspeichers, aufweisen, der hinsichtlich seines Volumens durch einen geeigneten Aktor verändert werden kann, um Flüssigkeit aus der Zentrifugentrommel herauszusaugen bzw. in diese zurückzugeben.

Vorteilhafterweise erfolgt hierbei die Wasserentfernung automatisch durch eine geeignete Steuereinrichtung, beispielsweise in Abhängigkeit der Zentrifugentrommeldrehzahl, so dass bei deren Stillstand das Wasser entfernt und beim Anlaufen wieder zurückgegeben werden kann.

In Weiterbildung der Erfindung kann hierbei auch der Füllstand der Zentrifuge überwacht werden, beispielsweise durch einen den Flüssigkeitspegel in der Zentrifugentrommel erfassenden Sensor und/oder durch einen die Feststofffüllung erfassenden Sensor, beispielsweise in Form eines die radiale Feststoffablagerung erfassenden Lichtsensors.

Die Erfindung wird nachfolgend anhand eines bevorzugten Ausführungsbeispiels und zugehöriger Zeichnungen näher erläutert. In den Zeichnungen zeigen:
- Fig. 1:: einen Längsschnitt durch einen Abscheider nach einer bevorzugten Ausführung der Erfindung,
- Fig. 2:: den Abscheider aus Fig. 1 mit einem daran anmontierten Drehantrieb,
- Fig. 3:: eine nicht geschnittene Seitenansicht des Abscheiders und des daran montierten Drehantriebs aus Fig. 2,
- Fig. 4:: einen Längsschnitt durch einen Abscheider nach einer weiteren bevorzugten Ausführung der Erfindung, bei der der Luftabfuhrkanal aus der Zentrifugentrommel heraus zur Kühlung des Motors durch dessen Gehäuse geführt ist,
- Fig. 5:: einen Querschnitt durch den Motor und den diesen umgebenden Kühlluftkanal entlang der Linie C-C in Fig. 4,
- Fig. 6:: eine nicht geschnittene Seitenansicht des Abscheiders aus den vorhergehenden Figuren,
- Fig. 7:: einen ausschnittsweisen Längsschnitt durch einen Abscheider ähnlich Fig. 4 nach einer weiteren bevorzugten Ausführung der Erfindung, bei der die Zentrifugentrommel ohne Feststoffsperrflansch ausgebildet ist,
- Fig. 8:: eine perspektivische Ansicht der herausgenommenen Zentrifugentrommel des Abscheiders nach der Ausführung der Figur 4 in einer Explosionsdarstellung mit einem zugehörigen, die Zentrifugentrommel verschließenden Deckel, und
- Fig. 9:: einen Längsschnitt durch die Zentrifugentrommel aus Fig. 8 mit verschlossenem Deckel.

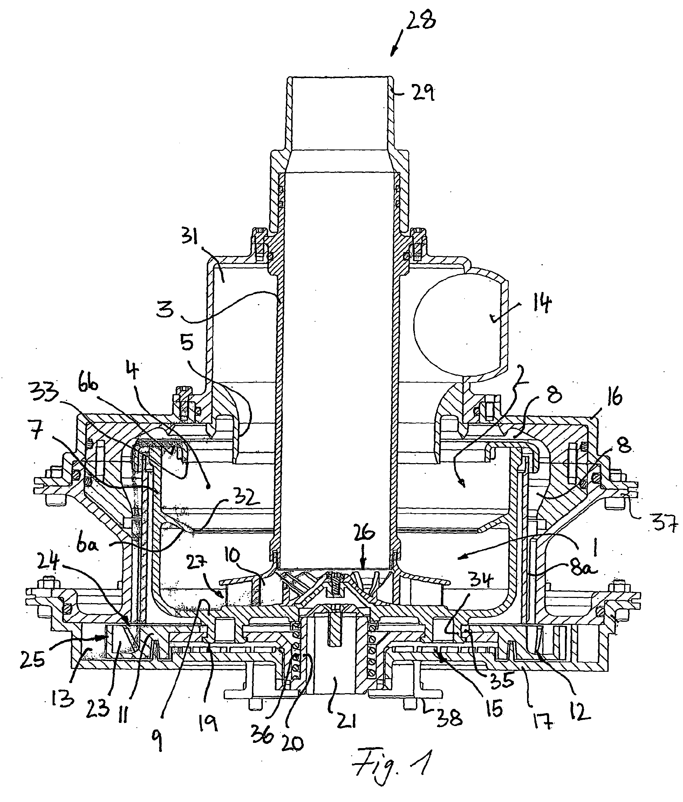

Der in Figur 1 gezeigte Abscheider umfasst ein mehrteiliges, in verschiedene axiale Abschnitte unterteiltes Abscheidergehäuse 16, das an seiner oben liegenden Stirnseite 28 einen Abwassergemischanschluss 29 aufweist, über den das in seine Bestandteile zu zerlegende Abwassergemisch in den Abscheider eingeleitet werden kann. Wie Figur 1 zeigt, führt der genannte Abwassergemischanschluss 29 in ein zentrales, zur Drehachse der noch näher zu beschreibenden Zentrifugentrommel 4 koaxiales Gemischzufuhrrohr 3, welches im wesentlichen vertikal in den Innenraum der Zentrifugentrommel 4 führt und dort oberhalb des Bodens 9 der Zentrifugentrommel 4 mündet. Das besagte Gemischzufuhrrohr 3 sitzt dabei mit seinem unteren Mündungsbereich auf dem Einlaufbereich 24 eines Turbinenrads 10, welches unmittelbar auf dem im wesentlichen ebenen Boden 9 der Zentrifugentrommel 4 befestigt ist. Wie Figur 1 zeigt, bildet der Boden 9 der Zentrifugentrommel 4 teilweise auch eine Wandung des Turbinenrads 10, das durch ein zentrales Befestigungsmittel 30 in Form eines Schraubbolzens fest, jedoch lösbar auf dem Zentrifugentrommelboden 9 befestigt ist. Das Turbinenrad 10 ist dabei vom Axial-/Radialtyp, so dass die über den axialen Einlaufbereich 26 eingeleiteten Abwassergemische über den radialen Ablauf 27 aus dem Turbinenrad 10 herausgeschleudert werden.

Wie Figur 1 zeigt, sitzen das Gemischzufuhrrohr 3 und der Einlaufbereich 24 des Turbinenrads 10 ringförmig ineinander. Das Gemischzufuhrrohr 3 besitzt in der gezeichneten Ausführungsform eine ringförmige Einstecktasche, in die ein stirnseitig vorspringender Ringsteg des Turbinenrads 10 eingreift. Das Turbinenrad 10 ist dabei gegenüber dem Gemischzufuhrrohr 3 drehbar, welches feststehend an dem Abscheidergehäuse 16 befestigt ist.

Wie Figur 1 zeigt, ist der radiale Ablaufbereich 27 des Turbinenrads 10 unmittelbar über dem Boden 9 der Zentrifugentrommel 4 angeordnet, so dass aus dem Turbinenrad 10 austretende flüssige und feste Bestandteile des Abwassergemisches über den Boden 9 zur Mantelfläche 7 der Zentrifugentrommel geleitet werden. Während die Feststoffe und die flüssigen Bestandteile an der Innenwandung der im wesentlichen zylindrischen, insbesondere kreiszylindrischen Mantelfläche 7 nach oben steigen, kann die von den flüssigen und festen Bestandteilen getrennte Luft des Abwassergemisches, die durch den von dem Turbinenrad 10 erzeugten Drall und die entsprechende kinetische Energie sowie die von der Zentrifugentrommel 4 bewirkte Zentrifugalbeschleunigung effizient von den flüssigen und festen Bestandteilen getrennt werden kann, im Inneren der Zentrifugentrommel 4 gegenläufig zu dem Gemischzufuhrrohr 3 nach oben aus der Zentrifugentrommel 4 herausgeführt werden. Wie Figur 1 zeigt, erstreckt sich ein Luftabfuhrkanal 5 koaxial um das Gemischzufuhrrohr 3 herum und mündet in einen Gehäuseraum 31, von dem ein Luftaustritt 14 radial bzw. tangential aus dem Abscheidergehäuse 16 herausführt.

Wie Figur 1 zeigt, springen von der Innenseite der Zentrifugentrommelmantelfläche 7 radial nach innen zwei Feststoffsperrflansche 6a und 6b vor, wobei der erste, weiter unten liegende Feststoffsperrflansch 6a eine zum Zentrifugentrommelboden 9 hin abfallende Kegelfläche bildet und einen radial weiter innen liegenden Überlaufrand 32 besitzt als der am oberen Ende der Zentrifugentrommel 4 angeordnete zweite Feststoffsperrflansch 6b. Letzterer besitzt einen nach unten hängenden Innenrand 33, der mit dem Dachabschnitt des Feststoffsperrflansches 6b einen zweiten Stauraum für Feststoffe bildet, die es geschafft haben, über den ersten Feststoffsperrflansch 6a hinwegzukommen.

Während die Feststoffe an den beiden Feststoffsperrflanschen 6a und 6b gesammelt werden, kann das Wasser bzw. der flüssige Bestandteil des Abwassergemisches über den oberen Rand der Zentrifugentrommel 4 hinwegsteigen und über diesen in den Wasserabfluss 8 austreten, welcher zunächst aus einem scheibenringförmigen Zwischenraum zwischen dem besagten oberen Feststoffsperrflansch 6b und einem entsprechenden Gehäuseabschnitt besteht und sodann in einen ringförmigen Abflusskanal 8a übergeht, der sich zwischen der Mantelaußenfläche der Zentrifugentrommel 4 und dem letztere umgebenden Gehäuseabschnitt erstreckt, vgl. Figur 1.

Am unteren Ende der Zentrifugenmantelfläche 7 mündet der besagte ringförmige Abschnitt des Wasserabflusses 8a auf einen Schaufelblattkranz 23 eines Pumpenrades 11 einer Abwasserförderpumpe 12, die sich auf der Außenseite der Zentrifugentrommel 4 unmittelbar unter deren Boden 9 erstreckt. Der Schaufelblattkranz 23 liegt dabei etwa im Übergangsbereich zwischen dem Zentrifugentrommelboden und der Zentrifugentrommelmantelfläche 7, vgl. Figur 1. Das Pumpenrad 11 ist dabei ebenfalls vom Axial-/Radialtyp. Das über den axialen Einlaufbereich 24 eintretende Abwasser wird über den radialen Abflussbereich 25 abgegeben und kann über einen Abwasseraustritt 13 aus dem Abscheidergehäuse 16 etwa auf Höhe des Pumpenrades 11 austreten.

Wie Figur 1 zeigt, ist auch das Pumpenrad 11 unmittelbar mit dem Boden 9 der Zentrifugentrommel 4 verbunden, und zwar über werkzeugfrei betätigbare Schnellverschlussmittel 19 in Form eines federvorgespannten Bajonettverschlusses, der vom Zentrifugentrommelboden 9 vorspringende Verriegelungsvorsprünge 34 aufweist, die von der Drehachse der Zentrifugentrommel 4 beabstandet über deren Umfang verteilt angeordnet sind. In dem Pumpenrad 11 sind damit zusammenwirkende Verriegelungsausnehmungen 35 vorgesehen, die sozusagen ein Schlüsselloch für die Verriegelungsvorsprünge 34 bilden und durch axiales Aufsetzen des Pumpenrades 11 auf den Zentrifugentrommelboden 9 in Eingriff gebracht werden können. Zur Verriegelung können sie dann durch leichtes Verdrehen gebracht werden.

Wie Figur 1 zeigt, ist ein zentrales Nabenstück 20 am Pumpenrad 11 verriegelt, das ein Kupplungsstück 21 in Form einer zentralen Wellenausnehmung aufweist. Zwischen dem Nabenstück 20 und dem Zentrifugentrommelboden 9 ist eine Feder 36 zur Verspannung der über die Schnellverschlussmittel 19 zusammengehaltenen Bauteile vorgesehen.

Die Zentrifugentrommel 4, das daran befestigte Turbinenrad 10 und das die Zentrifugentrommel 4 tragende Pumpenrad zusammen mit dem Nabenstück 20 bilden eine Montageeinheit 15, die auf einem ein Gehäuseteil 17 bildenden Baugruppenträger sitzt, der insgesamt etwa nach Art eines Napfs ausgebildet ist und einen seitlichen Befestigungsflansch 37 umfasst, mittels dessen der Gehäuseteil 17 lösbar an dem Rest des Abscheidergehäuses 16 befestigt werden kann, vgl. Figur 1. Der Gehäuseteil 17 trägt die zuvor beschriebene Montagebaugruppe 15 bzw. bildet einen Teil derselben, die als Ganzes nach Lösen des Befestigungsflansches 37 von dem restlichen Abscheidergehäuse 16 abgenommen werden kann, das das Gemischzufuhrrohr 3 umgibt.

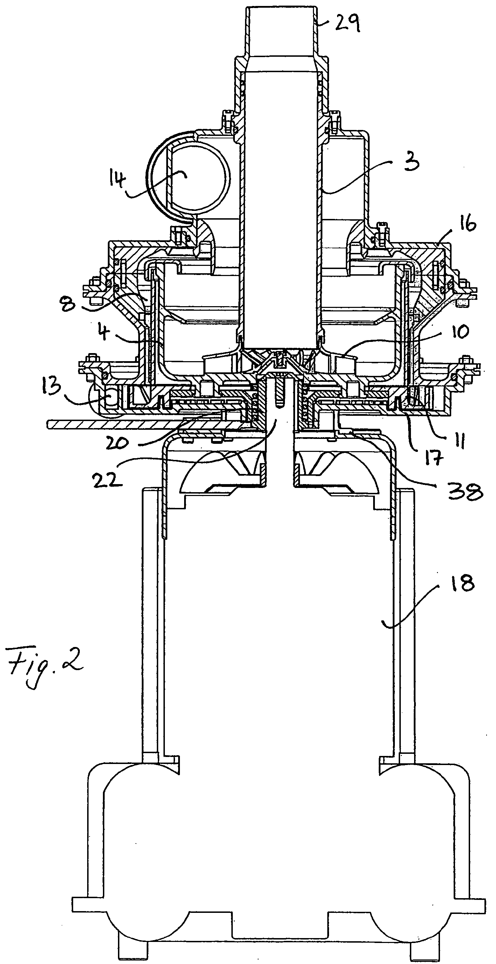

Wie Figur 1 zeigt, umfasst der Gehäuseteil 17 um das Nabenstück 20 herum ein Anschlussstück 38, an dem der in Figur 2 gezeigte Drehantrieb 18 bzw. dessen stirnseitiger Gehäuseabschnitt starr befestigt werden kann. Der Drehantrieb 18 umfasst dabei vorteilhafterweise eine vorstehende Antriebswelle.

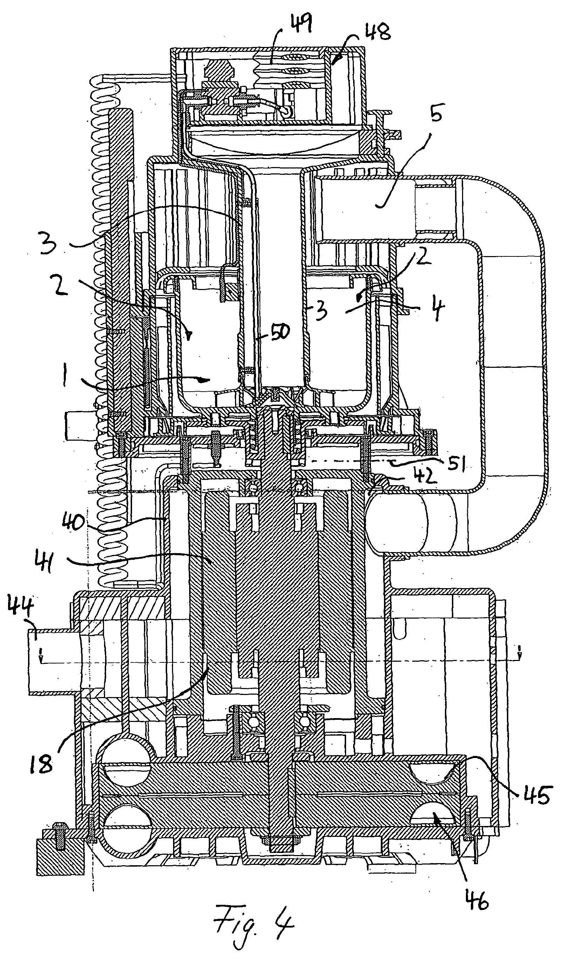

Die Figuren 4 bis 6 zeigen eine weitere vorteilhafte Ausführungsform eines Abscheiders, der in vielen Teilen der zuvor beschriebenen Ausführung entspricht, so dass für entsprechende Bauteile entsprechende Bezugsziffern verwendet sind und insoweit auf die vorangehende Beschreibung verwiesen wird.

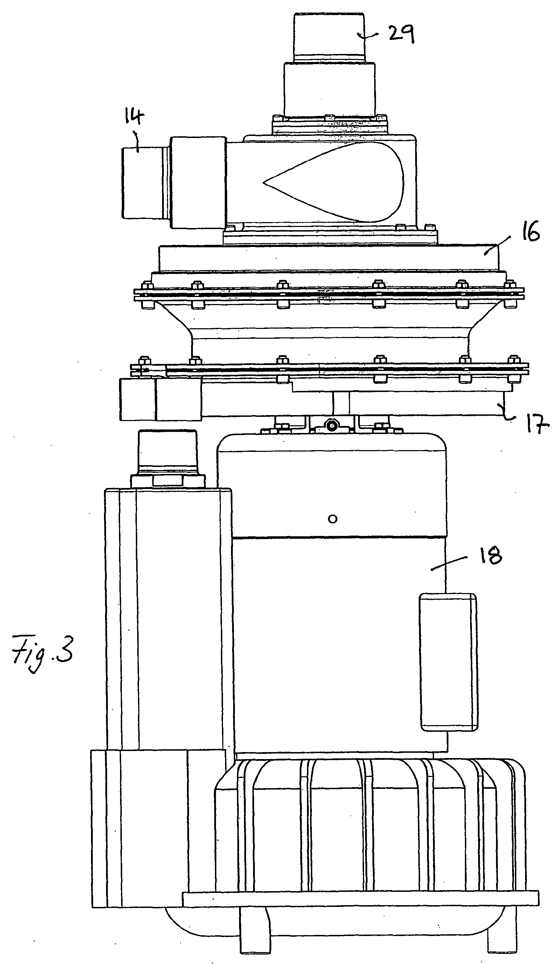

Wesentlicher Unterschied der Ausführung gemäß den Figuren 4 bis 6 gegenüber der Ausführung nach den Figuren 1 bis 3 ist die Abführung der im Luft-WasserAbscheider 1 abgeschiedenen Luft. Wie insbesondere Figur 4 zeigt, ist der Luftabfuhrkanal 5 abschnittsweise als Kühlluftkanal ausgebildet, um den die Zentrifugentrommel 4 antreibenden Motor 18 zu kühlen. Insbesondere ist der Luftabfuhrkanal 5 an einem oberen Ende des Motorgehäuses 40, das unmittelbar an den Deckel 17 angrenzt, in das Motorgehäuse 40 hineingeführt, wobei in vorteilhafter Weise der Luftabfuhrkanal 5 radial in das besagte Motorgehäuse 40 hineingeführt ist, vgl. Figur 4, wodurch eine axial kompakte Bauweise erzielt werden kann. Weiterhin ist im Gegensatz zu der Ausführung nach Figur 2 auf ein separates Lüfterrad zur Kühlung des Motors 18 verzichtet, d.h. die Kühlung des Motors 18 wird allein über den aus der Zentrifugentrommel 4 abgesaugten Luftstrom gekühlt.

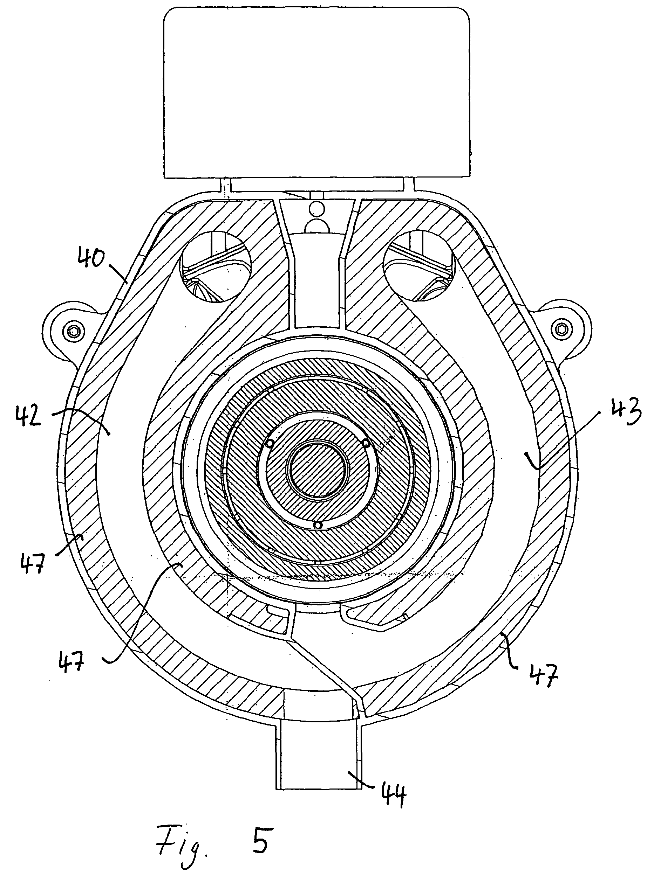

Wie Figur 5 am besten zeigt, wird der die Wicklung 41 des Motors 18 aufweisende Motorabschnitt von zwei halbschalenförmigen Kühlluftkanalabschnitten 42, 43 umgeben, von denen der eine mit dem Luftabfuhrkanal 5 und der andere mit dem Abluftkanal 44 in Verbindung steht. Beide Kühlluftkanalabschnitte 42 und 43 stehen dabei mit einem Verdichter- bzw. Pumpenrad 45 des Abluftgebläses in Verbindung, das die in der Zentrifugentrommel 4 separierte Luft über den Luftabfuhrkanal 5 absaugt und über den genannten Abluftkanal 44 abführt. Das Abluftgebläse 46 wird dabei ebenfalls von dem Motor 18 angetrieben, der die Zentrifugentrommel 4 antreibt, wobei das Abluftgebläse 46 auf der der Zentrifugentrommel 4 gegenüberliegenden Seite des Motors 18 angeordnet ist. Das vorgenannte Verdichter- bzw. Pumpenrad 45 sitzt dabei auf der Motorachse, auf der auch die Zentrifugentrommel 4 bzw. das damit verbundene Kupplungsstück 21 sitzt.

Vorteilhafterweise ist der Luftabfuhrkanal 5 im Bereich des Motors, insbesondere im Bereich der vorgenannten Kühlluftkanalabschnitte 42 und 43, schall- und/oder wärmegedämmt. Wie Figur 5 zeigt, sind die beiden Kühlluftkanalabschnitte 42 und 43, die den Motor 18 bzw. dessen Wicklung umgeben, jeweils mit Dämmmaterial 47 wandungsseitig verkleidet, so dass über den Kühlluftkanal gleichzeitig eine Geräuschdämmung erzielt werden kann.

Um ein störungsfreies Anlaufen des Abscheiders zu gewährleisten, kann die in der Zentrifugentrommel 4 abgeschiedene Flüssigkeit bei Stillstand der Zentrifugentrommel aus dieser entfernt werden, so dass ein Überschwappen bzw. ein Aufschwingen der Zentrifugentrommel 4 beim Anlaufen verhindert ist. In der gezeichneten Ausführung gemäß Figur 4 ist hierzu ein Wasserentferner 48 vorgesehen, der in der gezeichneten Ausführung auf der Oberseite des Abscheiders angeordnet ist. Der Wasserentferner 48 kann hierbei vorteilhafterweise einen Zwischenspeicher 49 umfassen, der vorteilhafterweise volumenveränderlich ausgebildet ist, insbesondere in Form eines Faltenbalgs beschaffen sein kann, so dass durch Volumenveränderung des Zwischenspeichers die in der Zentrifugentrommel 4 gespeicherte Flüssigkeit abgesaugt werden kann. Es versteht sich jedoch, dass grundsätzlich auch andere Ausbildungen des Wasserentferners möglich sind, beispielsweise eine separate Pumpe, die in einen Speicher fördert.

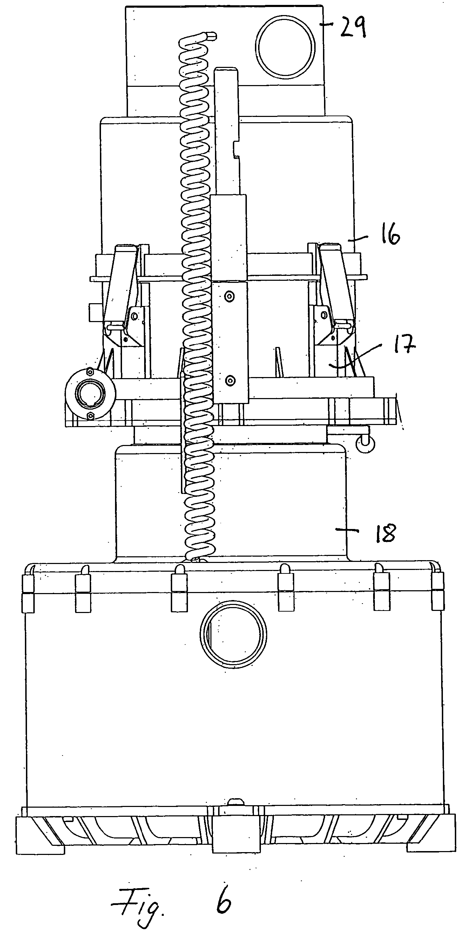

Der Wasserentferner 48 umfasst hierbei vorteilhafterweise eine in Figur 6 gezeigte Absaugleitung 50, die sich mit einem Ende bis zum Boden der Zentrifugentrommel 4, insbesondere im Bereich des Turbinenrads 10, erstreckt, und mit ihrem anderen Ende mit dem vorgenannten Faltenbalg in Verbindung steht.

Vorteilhafterweise wird der Wasserentferner 48 durch eine in den Figuren nicht eigens dargestellte Steuervorrichtung angesteuert, die automatisch bei Abschalten des Abscheiders bzw. Stehenbleiben der Zentrifugentrommel 4 den Wasserentferner 48 in Gang setzt, um in der Zentrifugentrommel 4 abgeschiedene Flüssigkeit abzusaugen. Bei bzw. nach Wiederanlaufen der Zentrifuge wird das Wasser bzw. respektive die Flüssigkeit wieder in die Zentrifugentrommel 4 zurückgegeben.

Weiterhin ist in Figur 4 ein stiftförmiger Riegel 51 zu sehen, mit Hilfe dessen der Motor 18 in einer vorbestimmten Stellung blockiert werden kann. Hierzu wird der stiftförmige Riegel 51 radial nach innen gefahren, um in einer entsprechenden Ausnehmung einzurasten. Hierdurch kann die Zentrifugentrommel 4 in einfacher Weise abgedreht werden.

Wie Figur 6 zeigt, können das obere Gehäuseteil 16 und das untere Gehäuseteil 17 mittels Schnellspannmitteln vorzugsweise in Form von Spannhebeln miteinander verbunden sein. Werden die genannten Spannmittel gelöst, kann der obere Gehäuseteil 16 mit dem daran befestigten Gemischzufuhrrohr 3 von dem unteren Gehäuseteil 17 abgehoben und aus der Zentrifugentrommel herausgehoben werden. Um die Zentrifugentrommel 4 entnehmen zu können, wird mittels des genannten Riegels 51 das Nabenstück 20 verriegelt, so dass sich das daran befestigte Pumpenrad 11 nicht mehr drehen kann. Hierdurch kann durch Drehen der Zentrifugentrommel 4 der Bajonettverschluss 19 gelöst und die Zentrifugentrommel 4 entnommen werden.

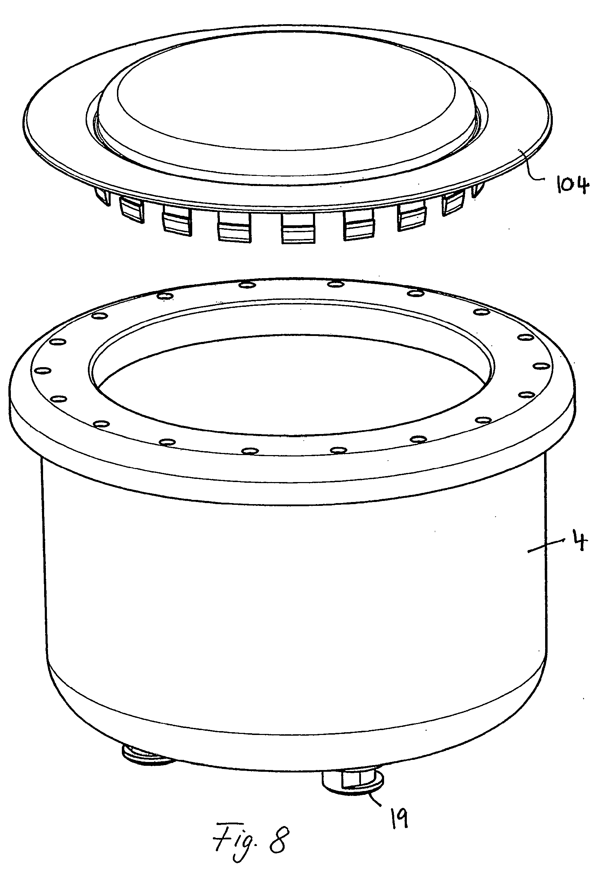

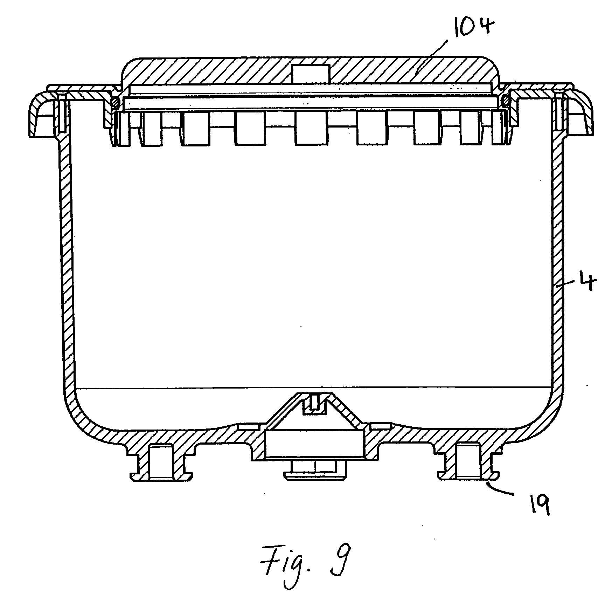

Wie die Figuren 8 und 9 zeigen, besitzt die Zentrifugentrommel 4 eine Aufstandsfläche, die von den Schnellverriegelungsmitteln 19 gebildet sein können. Vorteilhafterweise ist die Zentrifugentrommel 4 mit einem Deckel 104 verschließbar. Vorteilhafterweise kann der Deckel 104 Rastmittel in Form von vorspringenden Rastzungen aufweisen, mittels derer er formschlüssig am Rand der Zentrifugentrommel gehalten wird, vgl. Figur 9. Ist gemäß den Ausführungen der Figuren 1 bis 6 ein Feststoffsperrflansch am oberen Ende der Zentrifugentrommel 4 vorgesehen, kann der genannte Deckel 104 daran festgeklemmt oder verrastet werden.

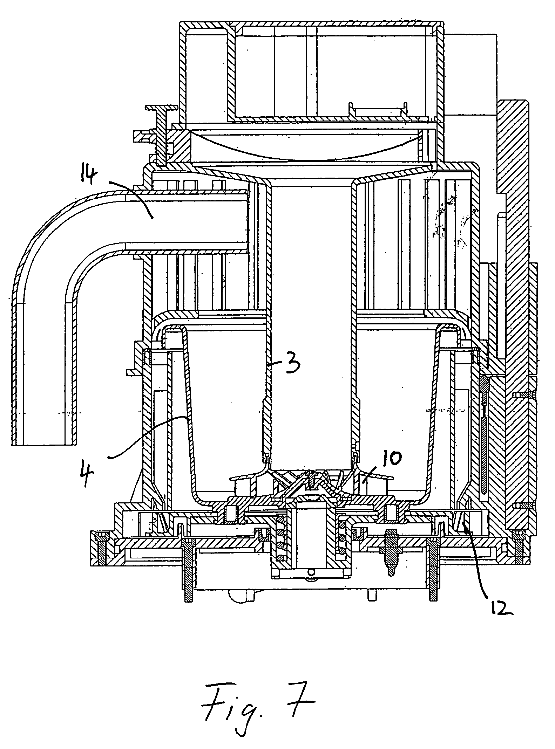

Figur 7 zeigt eine weitere Ausführungsform eines Abscheiders, der in wesentlichen Teilen den zuvor beschriebenen Ausführungen entspricht, so dass auf deren Beschreibung verwiesen wird. Wesentlicher Unterschied gegenüber den Ausführungen gemäß Figuren 1 bis 6 ist die Ausbildung der Zentrifugentrommel 4, die an ihrer Mantelinnenfläche keine nach innen vorspringenden Feststoffsperrflansche aufweist. Am oberen Rand der napfförmigen Zentrifugentrommel 4 ist lediglich ein Überlaufrand vorgesehen, über den hinweg das zentrifugierte Wasser mit ggf. daran befindlichen Feststoffen überströmen kann, vgl. Figur 7.

## Patentansprüche

1. Abscheider zum Abscheiden von Luft und ggf. vorhandenen Feststoffen aus einem zahnärztlichen Abwassergemisch, mit einem Luft-Wasser-Separator (1), wobei ein Gemischzufuhrrohr (3) in einer Zentrifugentrommel (4) mündet und die Zentrifugentrommel (4) einen oben liegenden Ablaufrand aufweist, über den hinweg ein Wasserabfluss (8) auf die Zentrifugentrommelaußenseite geführt ist, **dadurch gekennzeichnet, dass** das Gemischzufuhrrohr (3) auf ein zentrales, unmittelbar auf dem Zentrifugentrommelboden (9) sitzendes Turbinenrad (10) mündet und ein Schaufelblattkranz (23) eines Pumpenrads (11) einer Abwasserförderpumpe (12), die mit dem Wasserabfluss (7) kommuniziert, auf einer Außenseite der Zentrifugentrommel (4) am äußeren Rand des Zentrifugentrommelbodens (9) angeordnet ist, **dadurch gekennzeichnet, dass** ein Luftabfuhrkanal (5) gegenläufig zu dem Gemischzufuhrrohr (3) aus der Zentrifugentrommel (4) herausgeführt ist, wobei der Luftabfuhrkanal (5) zumindest abschnittsweise als Kühlluftkanal zur Kühlung eines die Zentrifugentrommel (4) antreibenden Motors (18) ausgebildet ist.

2. Abscheider nach Anspruch 1, wobei der Luft-Wasser-Separator (1) in einem Feststoffabscheider (2) angeordnet ist, so dass der Luft-Wasser-Separator (1) und der Feststoffabscheider (2) ineinander liegend angeordnet sind, wobei der Feststoffabscheider (2) zumindest einen Feststoffsperrflansch (6) an der Zentrifugentrommelmantelfläche (7) aufweist.

3. Abscheider nach einem der vorhergehenden Ansprüche, wobei ein Abwasseraustritt (13) unterhalb des Zentrifugentrommelbodens (9) etwa auf Höhe des Pumpenrads (11) und ein Luftaustritt (14) oberhalb der Zentrifugentrommel (4) angeordnet sind.

4. Abscheider nach einem der vorhergehenden Ansprüche, wobei die Zentrifugentrommel (4) frei von Feststoffaustrittsöffnungen ausgebildet ist.

5. Abscheider nach einem der vorhergehenden Ansprüche, wobei das Turbinenrad (10), die Zentrifugentrommel (4) und das Pumpenrad (11) der Abwasserförderpumpe (12) eine Montageeinheit (15) bilden, die als Ganzes von einem das Gemischzufuhrrohr (3) aufnehmenden Abscheidergehäuseteil (16) abnehmbar ist, wobei die Montageeinheit einen vorzugsweise napfförmig ausgebildeten Baugruppenträger aufweist, der ein weiteres Abscheidergehäuseteil (17) bildet und an dem vorgenannten Abscheidergehäuseteil (16) lösbar befestigbar ist und das Pumpenrad (11) der Abwasserförderpumpe (13), die Zentrifugentrommel (4) und das Turbinenrad (10) drehbar trägt und/oder aufnimmt, wobei der Baugruppenträger einen zentralen Anschluss zum Anschließen eines Drehantriebs (18) aufweist.

6. Abscheider nach einem der vorhergehenden Ansprüche, wobei die Zentrifugentrommel (4), das Turbinenrad (10) und das Pumpenrad (11) durch ein gemeinsames zentrales Drehlager unter dem Zentrifugentrommelboden (9) gelagert sind, wobei die Zentrifugentrommel (4) mit ihrem Boden am Pumpenrad (11) der Abwasserförderpumpe (12) befestigt ist, wobei vorzugsweise werkzeugfrei betätigbare, lösbare Schnellverschlussmittel (19), vorzugsweise ein federvorgespannter Bajonettverschluss, zur Befestigung der Zentrifugentrommel (4) an dem Pumpenrad (11) vorgesehen sind.

7. Abscheider nach einem der vorhergehenden Ansprüche, wobei das Pumpenrad (11) der Abwasserförderpumpe (12), die Zentrifugentrommel (4) und das Turbinenrad (10) an einem zentralen Naben- und/oder Wellenstück (20) drehfest befestigt sind, welches ein Kupplungsstück (21) zur Ankupplung des gemeinsamen Drehantriebs (18) aufweist, wobei das Naben- und/oder Wellenstück (20) drehbar in dem ein weiteres Abscheidergehäuseteil (17) bildenden Baugruppenträger aufgenommen ist, wobei der Drehantrieb (18) mit einem Gehäuseabschnitt lösbar an dem Baugruppenträger befestigbar und mit einer Antriebswelle (22) lösbar mit dem Naben- und/oder Wellenstück (20) kuppelbar ist, wobei das Naben- und/oder Wellenstück (20) starr an der Antriebswelle (22) und der Baugruppenträger starr mit einem Drehantriebsgehäuseabschnitt verbindbar ist.

8. Abscheider nach einem der vorhergehenden Ansprüche, wobei das Pumpenrad (11) der Abwasserförderpumpe (12) einen axialen Einlaufbereich (24) aufweist, auf den ein ringförmiger, die Zentrifugentrommelmantelfläche (7) umgebender Abschnitt des Wasserabflusses (8) mündet, und einen radialen Abfluss (25) besitzt.

9. Abscheider nach einem der vorhergehenden Ansprüche, wobei das Gemischzufuhrrohr (3) in dem Luftabfuhrkanal (5) aufgenommen, vorzugsweise koaxial zu dem Luftabfuhrkanal (5) angeordnet ist, wobei das Gemischzufuhrrohr (3) stehend angeordnet ist und das Turbinenrad (10) gegenüber dem Gemischzufuhrrohr (3) drehbar ist, wobei das Turbinenrad (10) einen axialen Einlaufbereich (26) und einen radialen Ablauf (27) besitzt, und wobei das Gemischzufuhrrohr (3) und das Turbinenrad (10) ringförmig ineinander greifen.

10. Abscheider nach einem der vorhergehenden Ansprüche, wobei in der Zentrifugentrommel (4) mehrere übereinander angeordnete Feststoffsperrflansche (6a, 6b) vorgesehen sind, die unterschiedliche Formgebungen besitzen, wobei vorzugsweise ein näher am Zentrifugentrommelboden (9) liegender Feststoffsperrflansch (6a) eine radial weiter innen liegende Überlaufkante besitzt als ein vom Zentrifugentrommelboden (9) weiter entfernt liegender Feststoffsperrflansch (6b), und der näher am Zentrifugentrommelboden (9) liegende Feststoffsperrflansch (6a) eine radial nach innen zum Zentrifugentrommelboden (9) schräg abfallende, vorzugsweise kegelige Schrägfläche bildet, während der vom Zentrifugentrommelboden (9) weiter entfernt liegende Feststoffsperrflansch (6b) einen geknickten Querschnitt mit einer hängenden Innenkante aufweist.

11. Abscheider nach einem der vorhergehenden Ansprüche, wobei das Turbinenrad (10) und/oder das Pumpenrad (11) der Abwasserförderpumpe (12) unmittelbar auf dem Zentrifugentrommelboden (9) sitzt, wobei der Zentrifugentrommelboden (9) geschlossen ausgebildet ist.

12. Abscheider nach dem vorhergehenden Anspruch, wobei der Luftabfuhrkanal (5) durch einen den Motor (18), vorzugsweise dessen Wicklung (41), aufnehmenden Gehäuseabschnitt (40) hindurchgeführt ist, wobei der Motor (18) kühllüfterradfrei ausgebildet ist, und wobei vorzugsweise der Luftabfuhrkanal (5) zwei halbschalenförmige, die Wicklung des Motors (18) umgebende, gegenläufig durchströmte Kühlluftkanalabschnitte (42, 43) aufweist, wobei der Luftabfuhrkanal (5) zumindest abschnittsweise, insbesondere im Bereich seiner Ausbildung als Kühlluftkanal um den Motor (18) herum, mit Dämmelementen (47) wandungsseitig abgeschirmt ist.

13. Abscheider nach einem der vorhergehenden Ansprüche, wobei ein Wasserentferner (48) zum Entfernen von in der Zentrifugentrommel (4) abgeschiedener Flüssigkeit vorgesehen ist, der einen Zwischenspeicher (49) zur temporären Aufnahme der aus der Zentrifugentrommel (4) entfernten Flüssigkeit aufweist, wobei der Wasserentferner (48) von einer Steuereinrichtung ansteuerbar ist derart, dass beim Stehenbleiben der Zentrifugentrommel (4) der Wasserentferner (48) in Gang gesetzt und in der Zentrifugentrommel (4) abgeschiedene Flüssigkeit aus dieser entfernt wird und bei Wiederanlaufen der Zentrifugentrommel (4) die aus dieser zuvor entfernte Flüssigkeit wieder in die Zentrifugentrommel (4) zurückgegeben wird.

14. Abscheider nach einem der vorhergehenden Ansprüche, wobei der Zentrifugentrommel (4) eine Füllstandserfassungseinrichtung zugeordnet ist, die einen Sensor zur Erfassung des Flüssigkeitspegels in der Zentrifugentrommel (4) und/oder einen Sensor zur Erfassung der radialen Ausdehnung der Feststoffablagerung an der Zentrifugentrommelmantelfläche aufweist.

## Claims

1. A separator for separating air and possibly present solids from a mixture of dental waste water, comprising an air-water separator (1), wherein a mixture supply tube (3) opens into a centrifuge drum (4) and the centrifuge drum (4) has an upper draining edge over which a water outlet (8) is guided to the outside of the centrifuge drum, wherein the mixture supply tube (3) opens onto a central turbine wheel (10) seated directly on the centrifuge drum bottom (9) and a blade rim (23) of an impeller (11) of a waste water delivery pump (12) which communicates with the water outlet (8) is arranged on an outside of the centrifuge drum (4) at the outer edge of the centrifuge drum bottom (9), **characterized in that** an air discharge duct (5) is guided out of the centrifuge drum (4) countercurrently to the mixture supply tube (3), wherein the air discharge duct (5) is at least sectionally formed as cooling air duct for cooling a motor (18) driving the centrifuge drum (4).

2. The separator according to claim 1, wherein the air-water separator (1) is arranged in a solids separator (2), so that the air-water separator (1) and the solids separator (2) are arranged to lie one inside the other, wherein the solids separator (2) includes at least one solids blocking flange (6) on the centrifuge drum shell surface (7).

3. The separator according to any one of the preceding claims, wherein a waste water outlet (13) is arranged below the centrifuge drum bottom (9) approximately at the level of the impeller (11) and an air outlet (14) is arranged above the centrifuge drum (4).

4. The separator according to any one of the preceding claims, wherein the centrifuge drum (4) is formed free from solids outlet openings.

5. The separator according to any one of the preceding claims, wherein the turbine wheel (10), the centrifuge drum (4) and the impeller (11) of the waste water delivery pump (12) form a mounting unit (15) which can be removed as a whole from a separator housing part (16) accommodating the mixture supply tube (3), wherein the mounting unit includes a preferably cup-shaped assembly carrier which forms a further separator housing part (17) and can releasably be attached to the aforementioned separator housing part (16) and rotatably carries and/or accommodates the impeller (11) of the waste water delivery pump (13), the centrifuge drum (4) and the turbine wheel (10), wherein the assembly carrier includes a central port for connection of a rotary drive (18).

6. The separator according to any one of the preceding claims, wherein the centrifuge drum (4), the turbine wheel (10) and the impeller (11) are supported by a common central pivot bearing below the centrifuge drum bottom (9), wherein the centrifuge drum (4) is attached with its bottom to the impeller (11) of the waste water delivery pump (12), wherein releasable quick-acting closure means (19) preferably to be actuated tool-free, preferably a spring-biased bayonet lock, are provided for attachment of the centrifuge drum (4) to the impeller (11).

7. The separator according to any one of the preceding claims, wherein the impeller (11) of the waste water delivery pump (12), the centrifuge drum (4) and the turbine wheel (10) are non-rotatably attached to a central hub and/or shaft piece (20) which includes a coupling piece (21) for coupling to the common rotary drive (18), wherein the hub and/or shaft piece (20) is rotatably accommodated in the assembly carrier forming a further separator housing part (17), wherein the rotary drive (18) can releasably be attached to the assembly carrier with a housing portion and can releasably be coupled to a drive shaft (22) with the hub and/or shaft piece (20), wherein the hub and/or shaft piece (20) is rigidly mounted on the drive shaft (22) and the assembly carrier is rigidly connectable with a rotary drive housing portion.

8. The separator according to any one of the preceding claims, wherein the impeller (11) of the waste water delivery pump (12) includes an axial inlet region (24), onto which an annular portion of the water outlet (8) opens, which surrounds the centrifuge drum shell surface (7), and has a radial outlet (25).

9. The separator according to any one of the preceding claims, wherein the mixture supply tube (3) is accommodated in the air discharge duct (5), preferably arranged coaxially with respect to the air discharge duct (5), wherein the mixture supply tube (3) is arranged vertically and the turbine wheel (10) is rotatable with respect to the mixture supply tube (3), wherein the turbine wheel (10) has an axial inlet region (26) and a radial outlet (27), and wherein the mixture supply tube (3) and the turbine wheel (10) annularly engage in each other.

10. The separator according to any one of the preceding claims, wherein a plurality of solids blocking flanges (6a, 6b) arranged one above the other, which have different shapes, are provided in the centrifuge drum (4), wherein preferably a solids blocking flange (6a) located closer to the centrifuge drum bottom (9) has an overflow edge located radially further to the inside than a solids blocking flange (6b) located further away from the centrifuge drum bottom (9), and the solids blocking flange (6a) located closer to the centrifuge drum bottom (9) forms a preferably conical inclined surface sloping radially inwards towards the centrifuge drum bottom (9), whereas the solids blocking flange (6b) located further away from the centrifuge drum bottom (9) has a bent cross-section with a hanging inner edge.

11. The separator according to any one of the preceding claims, wherein the turbine wheel (10) and/or the impeller (11) of the waste water delivery pump (12) is seated directly on the centrifuge drum bottom (9), wherein the centrifuge drum bottom (9) is of the closed type.

12. The separator according to the preceding claim, wherein the air discharge duct (5) is guided through a housing portion (40) accommodating the motor (18), preferably its winding (41), wherein the motor (18) is formed without cooling fan wheel, and wherein preferably the air discharge duct (5) includes two half-shell-shaped cooling air duct portions (42, 43) traversed countercurrently, which surround the winding of the motor (18), wherein the air discharge duct (5) is at least sectionally shielded with insulating elements (47) on its wall, in particular in the vicinity of its formation as cooling air duct around the motor (18).

13. The separator according to any one of the preceding claims, wherein a water remover (48) is provided for removing liquid separated in the centrifuge drum (4), which includes a temporary reservoir (49) for temporarily receiving the liquid removed from the centrifuge drum (4), wherein the water remover (48) can be actuated by a control means such that the water remover (48) is put into operation and liquid separated in the centrifuge drum (4) is removed therefrom when the centrifuge drum (4) stops, and during restart of the centrifuge drum (4) the liquid previously removed therefrom again is returned to the centrifuge drum (4).

14. The separator according to any one of the preceding claims, wherein a filling level detection means is associated to the centrifuge drum (4), which includes a sensor for detecting the liquid level in the centrifuge drum (4) and/or a sensor for detecting the radial expansion of the solids deposition on the centrifuge drum shell surface.

## Revendications

1. Séparateur destiné à séparer de l'air et des matières solides éventuellement présentes d'un mélange d'eaux usées dentaires, comportant un séparateur d'air/eau (1), un tube d'amenée de mélange (3) débouchant dans un tambour centrifuge (4), et le tambour centrifuge (4) présentant un bord d'écoulement supérieur, par-dessus lequel un écoulement d'eau (8) est guidé vers la face extérieure du tambour centrifuge, le tube d'amenée de mélange (3) débouchant sur une roue de turbine (10) centrale logée directement sur le fond de tambour centrifuge (9) et une couronne de pales d'aube (23) d'une roue de pompe (11) d'une pompe de refoulement d'eaux usées (12), qui communique avec l'écoulement d'eau (8), est agencée sur une face extérieur du tambour centrifuge (4) au bord extérieur du fond de tambour centrifuge (9), **caractérisé en ce qu'**un canal d'évacuation d'air (5) sort du tambour centrifuge (4) à contre-courant du tube d'amenée de mélange (3), le canal d'évacuation d'air (5) étant réalisé au moins par sections sous forme de canal d'air froid pour refroidir un moteur (18) entraînant le tambour centrifuge (4).

2. Séparateur selon la revendication 1, dans lequel le séparateur d'air/eau (1) est agencé dans un séparateur de matières solides (2), de telle sorte que le séparateur d'air/eau (1) et le séparateur de matières solides (2) sont agencés de manière imbriquée l'un dans l'autre, le séparateur de matières solides (2) présentant au moins une bride de blocage de matières solides (6) sur la surface enveloppe (7) du tambour centrifuge.

3. Séparateur selon l'une des revendications précédentes, dans lequel une sortie d'eau (13) est agencée au-dessous du fond de tambour centrifuge (9) approximativement à la hauteur de la roue de pompe (11) et une sortie d'air (14) est agencée au-dessus du tambour centrifuge (4).

4. Séparateur selon l'une des revendications précédentes, dans lequel le tambour centrifuge (4) et réalisé sans orifices de sortie de matières solides.

5. Séparateur selon l'une des revendications précédentes, dans lequel la roue de turbine (10), le tambour centrifuge (4) et la roue de pompe (11) de la pompe de refoulement d'eaux usées (12) forment une unité de montage (15) qui est détachable dans son ensemble d'une partie (16) du boîtier de séparateur recevant le tube d'amenée de mélange (3), l'unité de montage présentant un porte-composants réalisé de préférence en forme de coupelle, qui forme une autre partie (17) du boîtier de séparateur et qui peut être fixé de manière amovible sur la partie (16) du boîtier de séparateur précitée et qui porte et/ou reçoit de manière rotative la roue de pompe (11) de la pompe de refoulement d'eaux usées (13), le tambour centrifuge (4) et la roue de turbine (10), le porte-composants présentant un raccordement central pour raccorder un entraînement rotatif (18).

6. Séparateur selon l'une des revendications précédentes, dans lequel le tambour centrifuge (4), la roue de turbine (10) et la roue de pompe (11) sont portés par un palier pivotant central commun au-dessous du fond de tambour centrifuge (9), le tambour centrifuge (4) étant fixé avec son fond sur la roue de pompe (11) de la pompe de refoulement d'eaux usées (12), des moyens de fermeture rapide (19) détachables, de préférence actionnables sans outils, de préférence une fermeture à baïonnette précontrainte par ressort, sont prévus pour la fixation du tambour centrifuge (4) sur la roue de pompe (11).

7. Séparateur selon l'une des revendications précédentes, dans lequel la roue de pompe (11) de la pompe de refoulement d'eaux usées (12), le tambour centrifuge (4) et la roue de turbine (10) sont fixés de manière solidaire en rotation sur une pièce de moyeu et/ou d'arbre (20) centrale qui présente une pièce d'accouplement (21) pour accoupler de l'entraînement rotatif (18) commun, la pièce de moyeu et/ou d'arbre (20) étant reçue de manière rotative dans le porte-composants formant une autre partie (17) du boîtier de séparateur, l'entraînement rotatif (18) pouvant être fixé de manière amovible sur le porte-composants au moyen d'un tronçon de boîtier et pouvant être accouplé de manière amovible à la pièce de moyeu et/ou d'arbre (20) au moyen d'un arbre d'entraînement (22), la pièce de moyeu et/ou d'arbre (20) pouvant être reliée de manière rigide à l'arbre d'entraînement (22) et le porte-composants pouvant être relié de manière rigide à un tronçon de boîtier d'entraînement rotatif.

8. Séparateur selon l'une des revendications précédentes, dans lequel la roue de pompe (11) de la pompe de refoulement d'eaux usées (12) présente une zone d'entrée (24) axiale sur laquelle débouche un tronçon annulaire de l'écoulement d'eau (8), qui entoure la surface enveloppe (7) du tambour centrifuge et qui possède un écoulement radial (25).

9. Séparateur selon l'une des revendications précédentes, dans lequel le tube d'amenée de mélange (3) est reçu dans le canal d'évacuation d'air (5), de préférence agencé coaxialement au canal d'évacuation d'air (5), le tube d'amenée de mélange (3) étant agencé à la verticale, et la roue de turbine (10) étant rotative par rapport au tube d'amenée de mélange (3), la roue de turbine (10) possédant une zone d'entrée (26) axiale et un écoulement (27) radial, et le tube d'amenée de mélange (3) et la roue de turbine (10) s'engageant de manière annulaire l'un dans l'autre.

10. Séparateur selon l'une des revendications précédentes, dans lequel plusieurs brides de blocage de matières solides (6a, 6b) agencées les unes sur les autres sont prévues dans le tambour centrifuge (4), lesquelles possèdent des formes différentes, une bride de blocage de matières solides (6a) située plus près du fond de tambour centrifuge (9) possédant de préférence un bord déversoir situé radialement plus à l'intérieur qu'une bride de blocage de matières solides (6b) située plus loin du fond de tambour centrifuge (9), et la bride de blocage de matières solides (6a) située plus près du fond de tambour centrifuge (9) formant une surface inclinée de préférence conique, descendant en oblique radialement vers l'intérieur vers le fond de tambour centrifuge (9) tandis que la bride de blocage de matières solides (6b) située plus loin du fond de tambour centrifuge (9) présente une section transversale coudée avec un bord intérieur suspendu.

11. Séparateur selon l'une des revendications précédentes, dans lequel la roue de turbine (10) et/ou la roue de pompe (11) de la pompe de refoulement d'eaux usées (12) est logée directement sur le fond de tambour centrifuge (9), le fond de tambour centrifuge (9) étant réalisé fermé.

12. Séparateur selon la revendication précédente, dans lequel le canal d'évacuation d'air (5) passe à travers un tronçon de boîtier (40) recevant le moteur (18), de préférence son bobinage (41), le moteur (18) étant réalisé sans roue de ventilateur de refroidissement, et le canal d'évacuation d'air (5) présentant de préférence deux tronçons (42, 43) du canal d'air de refroidissement en forme de demi-coques entourant le bobinage du moteur (18) et traversés en sens contraire, le canal d'évacuation d'air (5) étant, au moins par tronçons, protégé côté paroi par des éléments isolants (47) en particulier dans la zone de sa réalisation en tant que canal d'air de refroidissement autour du moteur (18).

13. Séparateur selon l'une des revendications précédentes, dans lequel est prévu un éliminateur d'eau (48) pour éliminer du liquide séparé dans le tambour centrifuge (4), qui présente un réservoir intermédiaire (49) pour recevoir temporairement le liquide éliminé hors du tambour centrifuge (4), l'éliminateur d'eau (48) pouvant être piloté par un dispositif de commande de telle sorte que lorsque le tambour centrifuge (4) s'arrête, l'éliminateur d'eau (48) est mis en marche et le liquide séparé dans le tambour centrifuge (4) est éliminé de celui-ci, et lorsque le tambour centrifuge (4) redémarre, le liquide éliminé auparavant de celui-ci est ramené dans le tambour centrifuge (4).

14. Séparateur selon l'une des revendications précédentes, dans lequel au tambour centrifuge (4) est associé un dispositif de détection de niveau de remplissage qui présente un capteur pour détecter le niveau de liquide dans le tambour centrifuge (4) et/ou un capteur pour détecter l'extension radiale du dépôt de matières solides dans la surface enveloppe de tambour centrifuge.
